# EUROPÄISCHE PATENTSCHRIFT

(11) **EP 0 685 089 B1**
(45) Veröffentlichungstag und Bekanntmachung des Hinweises auf die Patenterteilung: **08.01.1997**
(21) Anmeldenummer: 94906846.4
(22) Anmeldetag: 08.02.1994
(51) Int. Cl.: G06T 5/20

(54) **VERFAHREN ZUR VERBESSERUNG DER SICHTBARKEIT VON LINIENHAFTEN STRUKTUREN IN EINEM DIGITALEN BILD**
PROCESS FOR IMPROVING THE VISIBILITY OF LINED STRUCTURES IN A DIGITAL IMAGE
PROCEDE D'AMELIORATION DE LA VISIBILITE DE STRUCTURES LINEAIRES DANS UNE IMAGE NUMERIQUE

(30) Priorität: 17.02.1993 DE 4304860
(43) Veröffentlichungstag der Anmeldung: 06.12.1995
(73) Patentinhaber: SIEMENS AKTIENGESELLSCHAFT, 80333 München (DE)
(72) Erfinder: KUTKA, Robert, Dr., D-82269 Geltendorf (DE); STIER, Sebastian, Dr., D-85653 Aying (DE)
(86) Internationale Anmeldenummer: DE9400125
(87) Internationale Veröffentlichungsnummer: WO9419759

(56) Entgegenhaltungen:
- EP-A- 0 229 028
- FR-A- 2 590 702
- US-A- 4 213 150
- IEEE TRANSACTIONS ON COMPUTERS, Bd. C-26, Nr. 4 , April 1977 , USA Seiten 394 - 403 ZUCKER S W ET AL. 'An Application of Relaxation Labeling to Line and Curve Enhancement.'

## Beschreibung

Bei Röntgenuntersuchungen an Menschen versucht man die Röntgendosis und die Injektion von (meist toxischem) Kontrastmittel, welches die Adern sichtbar macht, möglichst niedrig zu halten, um den Patienten wenig zu belasten. Darunter leidet jedoch die Bildqualität, da das Röntgenrauschen zunimmt. Die Sichtbarkeit schmaler Strukturen wie Blutgefäße oder Katheter werden eingeschränkt und die Diagnose wird erschwert. Auch andere bildgebende Aufnahmeverfahren, wie z. B. die Magnetresonanztomographie oder die Sonographie vermindern durch systembedingtes Rauschen die Sichtbarkeit.

Es ist ein Verfahren zur Verbesserung der Sichtbarkeit linienhafter Strukturen in einem digitalen Bild bekannt (S. Zucker, An Application of Relaxation Labeling to Line and Curve Enhancement, IEEE, Transactions on Computers, Vol. C-25, No. 4, S. 394 - 403, April 1977). Bei diesem Verfahren werden jedem Bildpunkt sogenannte "Labels" zugeordnet, die jeweils eine Richtung eines Bildpunktes repräsentieren. Den Labeln wird eine Wahrscheinlichkeit zugeordnet, die die Wahrscheinlichkeit beschreibt, das die entsprechende Richtung tatsächlich zu dem Bildpunkt gehört. Die Wahrscheinlichkeiten werden in einem iterativen Prozeß abhängig von Kompatibilitätsrelationen benachbarter Bildpunkte verändert bis die Wahrscheinlichkeit eines bestimmten Labels jedes Bildpunktes einen Wert, aufweist, der ein Grenzkriterium erfüllt. Die Kompatibilitätsrelationen sind so, daß wenn zwei benachbarte Linien in gleicher oder ähnlichen Richtung orientiert sind, sie sich bezüglich der Wahrscheinlichkeit unterstützen.

Der Erfindung liegt daher die Aufgabe zugrunde, ein Verfahren zur Verbesserung der Bildqualität, speziell der Sichtbarkeit von linienhaften Strukturen in einem digitalen Bild anzugeben, welches die Vermeidung oder Reduktion der Anwendung von Kontrastmitteln ermöglicht. Diese Aufgabe wird mit Hilfe eines Verfahrens mit Merkmalen nach Anspruch 1 gelöst.

Bei diesem erfindungsgemäßen Verfahren wird jedem Bildpunkt eine Richtung, eine Amplitude und ein Satz von Zusammenhangsvektoren zugeordnet, mit deren Hilfe Linien von zusammenhängenden Punkten gefunden werden. Jedem Bildpunkt wird daraufhin mit Hilfe eines Gütemaßes, welches von seiner Amplitude und den Amplituden seiner Nachbarpunkte sowie der Länge des Linienstücks, auf dem er sich befindet, abhängt, ein Gütewert zugeordnet, welcher anschließend zu dem Helligkeitswert dieses Bildpunktes addiert wird.

Dem Fachmann ist hierbei klar, daß die Bedeutung des Wortes Addition in diesem Zusammenhang so zu verstehen ist, daß je nach dem Helligkeitswert der Linien in bezug auf ihren Untergrund geeignete Vorzeichen bei diesen Additionen zu verwenden sind. So welchseln die Vorzeichen bei der Anwendung des erfindungsgemäßen Verfahrens zur Verbesserung der Sichtbarkeit von hellen Linien auf dunklem Untergrund gegenüber einer Anwendung des Verfahrens zur Verbesserung der Sichtbarkeit von dunklen Linien auf hellem Untergrund. Die richtige Wahl der jeweiligen Vorzeichen ergibt sich für den Fachmann jedoch in selbstverständlicher Weise.

In gleicher Weise ist dem Fachmann klar, daß er die Addition von Helligkeitswerten oder auch die Multiplikation von Helligkeitswerten mit Gewichten immer so zu verstehen hat, daß vor Ausführung oder nach Ausführung dieser Rechenoperationen geeignete Normierungen der Zahlenwerte erforderlich sind, damit diese Rechenopertionen ein auf hierfür vorgesehenen digitalen Datenverarbeitungsanlagen speicherbares und darstellbares Bild ergeben. Dem Fachmann ist geläufig, wie solche Normierungen durchzuführen sind.

Das erfindungsgemäße Verfahren hat den Vorteil, daß es zu einem kontinuierlichen Bild führt, dessen Werte um so höher sind, je wahrscheinlicher und deutlicher Linien im Originalbild vorliegen. Dabei werden keine künstlichen Strukturen (z. B. Schließen von Stenosen) eingefügt.

Bei der kontrastverstärkten Darstellung von Linienstrukturen mit Hilfe des erfindungsgemäßen Verfahrens bleiben Helligkeitsunterschiede auf den Linien erhalten. Dies schafft den für eine klinische Anwendung notwendigen natürlichen Eindruck. Mit dem erfindungsgemäßen Verfahren ist eine Verstärkung der Linienkontraste mit einer Genauigkeit von einem Pixel möglich. Das erfindungsgemäße Verfahren arbeitet schneller als andere, z. b. regelbasierte Verfahren zur binären Blutgefäßsegmentierung.

Das erfindungsgemäße Verfahren ist jedoch auch außerhalb der Medizintechnik ganz allgemein zur Verbesserung der Sichtbarkeit von linienhaften Strukturen in digitalen Bildern anwendbar.

vorteilhafte Weiterbildungen der Erfindung ergeben sich aus den Unteransprüchen.

Figur 1 zeigt drei Beispiele von Richtungsmasken, welche in dem erfindungsgemäßen Verfahren zur Bestimmung von Linienrichtungen verwendet werden.

Figur 2 zeigt schematisch einen Suchwinkel zur Suche von benachbarten Bildpunkten mit ähnlichen Richtungen.

Figur 3 zeigt schematisch einen Suchbereich längs einer durch die Richtung eines Bildpunktes gegebenen Geraden.

Im folgenden wird die Erfindung mit Hilfe der Figuren anhand eines bevorzugten Ausführungsbeispiels beschrieben.

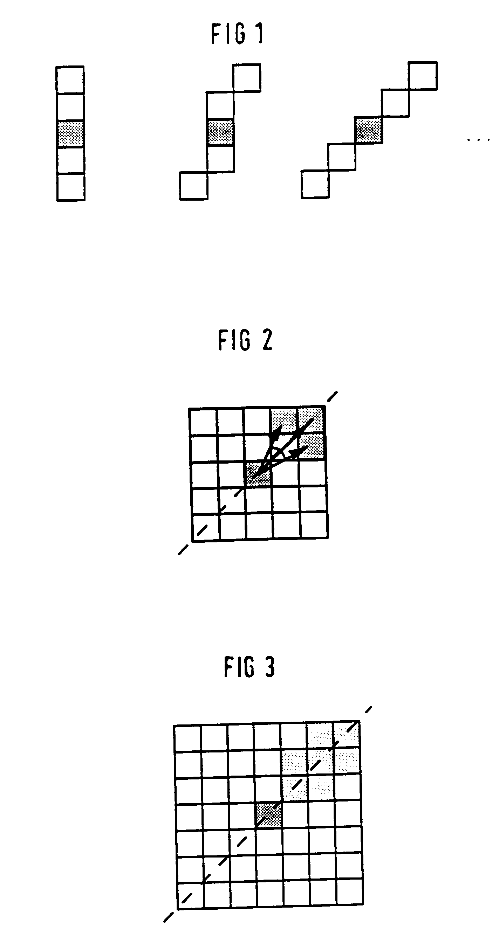

Ausgangspunkt des erfindungsgmäßen Verfahrens ist ein digitales Grauwertbild, wie es üblicherweise in der digitalen Bildverarbeitung, speziell in der Medizintechnik verwendet wird. Ein solches digitales Grauwertbild kann man sich als matrixförmige Anordnung von Bildpunkten vorstellen, wobei jedem Bildpunkt ein Helligkeitswert zugeordnet ist, der üblicherweise Werte zwischen 0 und 255 annehmen kann. Zur Durchführung des erfindungsgemäßen Verfahrens wird nun in einem ersten Schritt jedem Bildpunkt eine Richtung, eine Amplitude und ein Satz von Zusammenhangsvektoren zu Nachbarpunkten zugeordnet. Dieser Satz von Zusammenhangsvektoren kann aus 0,1 oder n Zusammenhangsvektoren bestehen. Zur Bestimmung der Richtung eines Bildpunktes wird vorzugsweise ein Satz von Richtungsmasken verwendet, wobei für jede Richtungsmaske aus diesem Satz von Richtungsmasken (Figur 1) die Summe der Helligkeitswerte der zu dieser Richtungsmaske gehörenden benachbarten Bildpunkte dieses Bildpunktes ermittelt wird. Der Satz von Richtungsmasken kann beispielsweise aus 8 Richtungsmasken bestehen, deren Länge typischer Weise zwischen 5 und 9 Pixeln beträgt. Die Richtung des Bildpunktes ergibt sich dabei aus der Richtung derjenigen Richtungsmaske, welche der größten Helligkeitssumme entspricht. Für die Suche nach breiteren Linien, welche z. B. Kanülen entsprechen, kann man auch breitere Richtungsmasken mit Breiten von mehr als einem Pixel (Pixel = Bildpunkt) benutzen.

Zur Bestimmung der Amplitude eines Bildpunktes wird zu jedem Bildpunkt die Differenz zwischen dem über alle Richtungsmasken gebildeten maximalen Helligkeitswert und dem über alle Richtungsmasken gebildeten Mittelwert aller Helligkeitssummen dieses Bildpunktes ermittelt. Diese Differenz wird dem Bildpunkt als Amplitude zugeordnet.

Ein Punkt hängt mit einem nächsten oder entfernteren Punkt zusammen, wenn die Richtungen beider Punkte am ähnlichsten (bezüglich eines Ähnlichkeitsmaßes) sind. In diesem Fall wird dem aktuellen Punkt ein Vektor zu diesem Nachbarpunkt (Zusammenhangsvektor) zugeordnet. Einem Bildpunkt wird also ein auf einen benachbarten Bildpunkt zeigender Zusammenhangsvektor zugeordnet, wenn die Richtungen beider Bildpunkte sich im Sinne eines Ähnlichkeitsmaßes hinreichend ähneln.

In einem bevorzugten Ausführungsbeispiel wird die Ähnlichkeit der Richtungen zweier Bildpunkte dadurch ermittelt, daß ein Suchwinkel um die Richtung eines ersten Bildpunktes vorgegeben ist, innerhalb welcher solche benachbarten Bildpunkte des ersten Bildpunktes ausgewählt werden, deren Richtung sich von der Richtung des ersten Bildpunktes maximal um einen vorgegebenen Wert unterscheidet. Dem ersten Bildpunkt werden dann Zusammenhangsvektoren zugeordnet, die auf diese benachbarten Bildpunkte zeigen.

Figur 2 zeigt schematisch den Suchbereich um einen ersten Bildpunkt des digitalen Bildes. In diesem Beispiel wird in einem Suchwinkel von einem Pixel um die zugeordnete Richtung (in der Figur 2 durch eine unterbrochene Linie dargestellt) nach in Frage kommenden Nachbarpunkten gesucht (Pfeile). Nachbarpunkte kommen in die engere Wahl, wenn die Richtungen dieser Nachbarpunkte nur um 1 Pixel von der Suchrichtung abweichen. Kommen mehr als ein Nachbarpunkt in Frage, wird bevorzugt der mittlere ausgewählt. Falls ein in Frage kommender Nachbarpunkt gefunden ist, wird ein Vektor dorthin dem aktuellen Punkt (ersten Bildpunkt) zugeordnet. Der gleiche Suchvorgang wird in Gegenrichtung durchgeführt, so daß in diesem Beispiel maximal zwei Vektoren einem Punkt zugeordnet werden können. In einem anderen Beispiel kann der Suchwinkel auch mehr als drei Nachbarbildpunkte (z. B. 5) auf jeder Seite der zugeordneten Richtung umfassen.

In einem weiteren Beispiel kann man so vorgehen, daß ein Nachbarpunkt nur dann für einen Zusammenhangsvektor ausgewählt wird, wenn seine zugeordnete Richtung parallel zur Suchrichtung (Richtung des ersten Bildpunktes) ist. Mit dieser Vorgehensweise schränkt man Linienverzweigungen im Ergebnisbild weitgehend ein.

Ist eine größere Genauigkeit beim Finden von Linien wichtig und ist es erforderlich, schmale Lücken oder Kreuzungen zu überspringen, ist es vorteilhaft, auch Nachbarbildpunkte im Abstand von 1 bis 3 Pixeln vom aktuellen (ersten) Bildpunkt in den Vergleich mit dem Ähnlichkeitsmaß einzubeziehen. Anstelle von 3, wie im Fall der Figur 2, würden in diesem Fall (Figur 3) etwa 7 benachbarte Bildpunkte überprüft.

Bei einem bevorzugten Ausführungsbeispiel der Erfindung wird deshalb die Ähnlichkeit der Richtungen zweier Bildpunkte dadurch ermittelt, daß ein Suchwinkel um die Richtung eines ersten Bildpunktes vorgegeben ist innerhalb welcher solche benachbarten Bildpunkte des ersten Bildpunktes ausgewählt werden, deren Richtung zu der Richtung des ersten Bildpunktes parallel ist; dem ersten Bildpunkt werden Zusammenhangsvektoren zugeordnet, die auf diese benachbarten Bildpunkte zeigen.

Die Verfolgung und Auffindung von Linien mit Hilfe der Zusammenhangsvektoren geschieht vorteilhaft in der Weise, daß von jedem Bildpunkt aus die Linien verfolgt werden, indem man ausgehend von einem ersten Bildpunkt entlang der diesen Bildpunkten zugeordneten Zusammenhangsvektoren springt, bis kein weiterführender Zusammenhangsvektor mehr gefunden wird oder bis eine maximale Suchlänge (z. B. 10 Pixel) erreicht ist. Bei dieser Linienverfolgung wird nun der Ausgangspunkt gewichtet, indem seine Amplitude mit einer Zahl multipliziert wird, welche abhängig ist von der Summe der Luminanzwerte der durchlaufenen Punkte oder ihrer Anzahl. Dazu alternativ ist es auch möglich, eine gewichtete Summe zu verwenden, bei der solche Punkte mehr zum Gewichtswert beitragen, die näher am aktuellen (ersten) Bildpunkt liegen. Der so ermittelte Gewichtswert wird z. B. mit dem Amplitudenwert des aktuellen Wertes multipliziert oder in anderer Weise zur Gewichtung des Amplitudenwertes verwendet. Dieses Ergebnis ist, nachdem es normiert wurde, d. h. einem vorgegebenen Helligkeitswertsbereich angepaßt wurde, das gesuchte Gütemaß für die Linien.

Ein bevorzugtes Ausführungsbeispiel des erfindungsgemäßen Verfahrens benötigt zu seiner Ausführung 88 Operationen (Additionen, Vergleiche und Multiplikationen) pro Bildpunkt. Hierbei wurden Speicherzugriffe nicht mitgezählt. Damit ist das erfindungsgemäße Verfahren schneller als vergleichbare, bekannte Verfahren zur Findung von Linien.

Das erfindungsgemäße Verfahren kann besonders vorteilhaft verwendet werden,
a) zur Hervorhebung feinster Linien (Blutgefäße, Katheter) in verrauschten Räntgenbildern zur deutlicheren Darstellung; dazu wird das Linienmaß dem Originalbild überlagert (addiert);
b) zur Rauschunterdrückung durch Steuerung der Zeitmittelung in Herzkathetersequenzen. In Herzkathetersequenzen soll das Röntgenrauschen vermindert werden, indem über jeweils die gleichen Bildpunkte verschiedener Bilder in zeitlicher Richtung der Mittelwert gebildet wird. Dies entspricht einer längeren Belichtung und daher höherer Räntgenschärfe. Es darf jedoch nicht über den sich bewegenden Katheter gemittelt werden, da er sonst verschmiert abgebildet würde. Deshalb muß der Katheter mit dem Liniendetektor erkannt werden (wozu eine Schwelle auf das Linienmaß angewendet wird) und aus der Mittelung herausgenommen werden. Hierbei läßt sich der Rechenaufwand zusätzlich reduzieren, wenn man eine Kalmannfilterung zur zeitlichen Glättung vornimmt. Diese zeitliche Filterung schätzt den Ort des Herzkatheters relativ genau, wenn auch noch Lücken und Rauschstrukturen verbleiben. Man kann jedoch diese Grobschätzung als Start für den Linienverfolgungsalgorithmus benutzen und spart damit Rechenschritte.

## Patentansprüche

1. Verfahren zur Verbesserung der Sichtbarkeit von linienhaften Strukturen in einem digitalen Bild mit folgenden Schritten:
a) jedem Bildpunkt wird eine Richtung zugeordnet;
b) jedem Bildpunkt wird eine Amplitude zugeordnet;
c) jedem Bildpunkt wird ein Satz von 0, 1, ... oder n Zusammenhangsvektoren zugeordnet, wobei einem Bildpunkt ein auf einen weiteren Bildpunkt zeigender Zusammenhangsvektor zugeordnet wird, wenn die Richtungen der beiden Bildpunkte bezüglich einem vorgebbaren Ähnlichkeitsmaß hinreichende Ähnlichkeit aufweisen;
d) mit Hilfe der Zusammenhangsvektoren werden Linien von zusammenhängenden Punkten gesucht;
e) jedem Bildpunkt wird mit Hilfe eines Gütemaßes, welches abhängt von seiner Amplitude und den Amplituden seiner Nachbarpunkte sowie der Länge des Linienstücks, auf dem er sich befindet, ein Gütewert zugeordnet;
f) der Gütewert eines jeden Bildpunktes wird zu seinem Helligkeitswert addiert.

2. Verfahren nach Anspruch 1, bei dem die Richtung eines Bildpunktes ermittelt wird, indem
a) für jede Richtungsmaske aus einem Satz von Richtungsmasken die Summe der Helligkeitswerte der zu dieser Richtungsmaske gehörenden benachbarten Bildpunkte dieses Bildpunktes ermittelt wird, und indem
b) dem Bildpunkt die Richtung derjenigen Richtungsmaske zugeordnet wird, deren Helligkeitssumme den größten Wert hat.

3. Verfahren nach Anspruch 2, bei dem jedem Bildpunkt die Differenz zwischen dem über alle Richtungsmasken gebildeten maximalen Helligkeitswert und dem über alle Richtungsmasken gebildeten Mittelwert aller Helligkeitssummen dieses Bildpunktes als Amplitude zugeordnet wird.

4. Verfahren nach einem der Ansprüche 1 bis 3, bei dem die Ähnlichkeit der Richtungen zweier Bildpunkte ermittelt wird, indem ein Suchwinkel um die Richtung eines ersten Bildpunktes vorgegeben ist, innerhalb welcher solche benachbarten Bildpunkte des ersten Bildpunktes ausgewählt werden, deren Richtung sich von der Richtung des ersten Bildpunktes maximal um einen vorgegebenen Wert unterscheidet; dem ersten Bildpunkt werden Zusammenhangsvektoren zugeordnet, die auf diese benachbarten Bildpunkte zeigen.

5. Verfahren nach einem der Ansprüche 1 bis 3, bei dem die Ähnlichkeit der Richtungen zweier Bildpunkte ermittelt wird, indem ein Suchwinkel um die Richtung eines ersten Bildpunktes vorgegeben ist, innerhalb welcher solche benachbarten Bildpunkte des ersten Bildpunktes ausgewählt werden, deren Richtung zu der Richtung des ersten Bildpunktes parallel ist; dem ersten Bildpunkt werden Zusammenhangsvektoren zugeordnet, die auf diese benachbarten Bildpunkte zeigen.

6. Verfahren nach einem der vorhergehenden Ansprüche, bei dem Linien von zusammenhängen Punkten gesucht werden, von jedem ersten Bildpunkt ausgehend diejenigen zweiten Bildpunkte zu einer Linie zusammengefaßt werden, welche durch eine Aneinanderreihung der Zusammenhangsvektoren der Bildpunkte innerhalb einer vorgegebenen Umgebung benachbarter Bildpunkte des ersten Bildpunktes erreichbar sind.

## Claims

1. Process for improving the visibility of lined structures in a digital image, having the following steps:
a) each pixel is assigned a direction;
b) each pixel is assigned an amplitude;
c) each pixel is assigned a set of 0, 1, ... or n relationship vectors, one pixel being assigned a relationship vector pointing to a further pixel if the directions of both of the pixels have sufficient similarity with regard to a prescribable measure of similarity;
d) with the aid of the relationship vectors, lines from related points are sought;
e) each pixel is assigned a quality value with the aid of a measure of quality which depends on its amplitude and the amplitudes of its adjacent points and on the length of the piece of line on which it is located;
f) the quality value of each pixel is added to its brightness value.

2. Process according to Claim 1, in which the direction of a pixel is determined by
a) determining the sum of the brightness values of the pixels which belong to this directional mask and are adjacent to this pixel for each directional mask from a set of directional masks, and
b) assigning to the pixel the direction of that directional mask whose brightness sum has the greatest value.

3. Process according to Claim 2, in which each pixel is assigned, as amplitude, the difference between the maximum brightness value formed over all the directional masks and the average of all brightness sums of this pixel formed over all the directional masks.

4. Process according to one of Claims 1 to 3, in which the similarity of the directions of two pixels is determined by prescribing a search angle around the direction of a first pixel, within which those pixels which are adjacent to the first pixel and whose direction differs at maximum by a prescribed value from the direction of the first pixel are selected; the first pixel is assigned relationship vectors which point to these adjacent pixels.

5. Process according to one of Claims 1 to 3, in which the similarity of the directions of two pixels is determined by prescribing a search angle around the direction of a first pixel, within which those pixels which are adjacent to the first pixel and whose direction is parallel to the direction of the first pixel are selected; the first pixel is assigned relationship vectors which point to these adjacent pixels.

6. Process according to one of the preceding claims, in which lines of related points are sought, and, proceeding from each first pixel, those second pixels which can be reached by arranging the relationship vectors of the pixels in a row within a prescribed environment of adjacent pixels of the first pixel are combined to form a line.

## Revendications

1. Procédé d'amélioration de la visibilité de structures linéaires dans une image numérique aux étapes suivantes:
a) une orientation est attribuée à chaque point d'image;
b) une amplitude est attribuée à chaque point d'image;
c) une série de 0, 1, ... respectivement n vecteurs de corrélation est attribuée à chaque point d'image, en attribuant à un point d'image un vecteur de corrélation visant un autre point d'image si les orientations des deux points d'image présentent une similitude suffisante par rapport à un degré de similitude à prédéfinir;
d) grâce à ces vecteurs de corrélation l'on recherche des lignes composées de points corrélés ;
e) une valeur qualitative est attribuée à chaque point d'image par le biais d'une mesure qualitative à définir en fonction de son amplitude et des amplitudes des points contigus aussi bien que de la longueur du segment de ligne sur lequel il se trouve;
f) la valeur qualitative de chaque point d'image et sa valeur de luminosité sont additionnées.

2. Procédé selon la revendication 1 selon lequel l'on détermine l'orientation d'un point d'image, en
a) déterminant pour chaque masque d'orientation appartenant à une série de masques d'orientation la somme des valeurs de luminosité des points d'image appartenant à ce masque d'orientation et contigus à ce point d'image, et en
b) attribuant au point d'image l'orientation du masque d'orientation qui présente la somme maximale des valeurs de luminosité.

3. Procédé selon la revendication 2 selon lequel l'on attribue à chaque point d'image, sous forme d'amplitude, la différence entre la valeur maximale de luminosité établie à partir de tous les masques d'orientation et la moyenne de toutes les valeurs de luminosité de ce point d'image établie à partir de tous les masques d'orientation.

4. Procédé selon l'une des revendications 1 à 3 selon lequel l'on détermine la similitude des orientations de deux points d'image en prédéfinissant un angle de recherche autour de l'orientation d'un premier point d'image dans laquelle des points d'image contigus au premier point d'image sont choisis dont l'orientation ne diffère de l'orientation du premier point d'image que d'une valeur maximale prédéfinie; des vecteurs de corrélation visant ces points d'image contigus sont attribués au premier point d'image.

5. Procédé selon l'une des revendications 1 à 3 selon lequel l'on détermine la similitude des directions de deux points d'image en prédéfinissant un angle de recherche autour de l'orientation d'un premier point d'image, dans laquelle des points d'image contigus au premier point d'image sont choisis, dont l'orientation est parallèle à celle du premier point d'image; des vecteurs de corrélation visant ces points d'image contigus sont attribués au premier point d'image.

6. Procédé selon l'une des revendications précédentes selon lequel l'on recherche des lignes de points corrélés et assemble en forme de ligne, à partir de chaque premier point d'image, tous les deuxièmes points d'image, qui sont à portée, en alignant les vecteurs de corrélation des points d'image dans un environnement prédéfini de points d'image contigus au premier point d'image.
